# EUROPEAN PATENT SPECIFICATION

(11) **EP 1 218 804 B1**
(45) Date of publication and mention of the grant of the patent: **12.05.2004**
(21) Application number: 00958297.4
(22) Date of filing: 26.07.2000
(51) Int. Cl.: G05B 19/404, B25J 9/16

(54) **METHOD AND DEVICE FOR CORRECTING TOOL POSITION ERRORS IN MACHINE TOOLS**
VERFAHREN UND VORRICHTUNG ZUR KORREKTUR VON WERKZEUGPOSITIONSFEHLERN IN WERKZEUGMASCHINEN
PROCEDE ET DISPOSITIF DESTINES A CORRIGER DES ERREURS DE POSITION D'OUTIL SUR DES MACHINES OUTILS

(30) Priority: 27.07.1999 IT VE990033
(43) Date of publication of application: 03.07.2002
(73) Proprietor: FPT INDUSTRIE S.P.A., 35012 Camposampiero (IT)
(72) Inventor: TOMELLERI, Raffaele, I-37138 Verona (IT)
(74) Representative: Piovesana, Paolo
(86) International application number: PCT/EP2000/007166
(87) International publication number: WO 2001/007975

(56) References cited:
- US-A- 5 535 306
- US-A- 5 604 413
- LAUER L: "POWER PLUS PRAEZISION" ELEKTROTECHNIK,DE,VOGEL VERLAG K.G. WURZBURG, vol. 74, no. 9, 24 September 1992 (1992-09-24), pages 36,39-40,42,, XP000311802 ISSN: 1431-9578

## Description

This invention relates to a method and device for correcting tool position errors in machine tools.

In machine tools in general, and in milling machine in particular, an often substantial operational error can arise between the theoretical position of the tool relative to the workpiece and its true position.

This error, which overall can be defined as a geometrical error, derives from two contributions, namely the position error of a reference point on the tool (for example the centre of the tool sphere in the case of a spherical tool, or the end of the axis of a cylindrical tool) and the error in the tool orientation relative to its theoretical orientation. This invention is essentially aimed at reducing the tool position error which occurs both statically and during movement of its axes, however the invention also enables its orientation to be corrected.

Reducing the tool position error is of fundamental importance as it enables machining quality to be improved while at the same time achieving a greater speed and acceleration, hence reducing machining times and costs.

In particular, reducing the position error in milling machines dedicated to mould machining is very important both for improving precision and for reducing manual polishing work, which involves considerable time and cost, with uncertain results.

Whatever the type of error, it is well known that tool position and orientation errors are present both statically, during low speed and low acceleration machining, and dynamically, during high speed and high acceleration machining.

For all these reasons it is extremely important to reduce as much as possible the error arising in any machine tool during operation, to which end machine tool designers and manufacturers devote considerable effort during the design stage in studying the dynamic characteristics of the axes and the machine structure, reducing the machining parameters and optimizing the control systems for the axes on the basis of their parts of travel, the arbor power and the weight of the workpiece and accessories.

Known solutions therefore involve the need to handle considerable masses, which limit the intrinsic axis frequencies and the intrinsic structural frequencies to values between about 10 Hz and 50 Hz in relation to the travel paths and weights of the moving parts. In their turn these low frequencies limit the performance obtainable with numerical control and in particular limit the space cycle gain and other connected parameters, resulting in limits on the obtainable precision, which is lower the higher the speed and acceleration during machining.

Machine in the form of a hexapod have recently been constructed, which rigidly support the arbor with lower structural masses. They increase the intrinsic machine frequencies, but at the same time they pose considerable limits on machining because of the particular type of machine.

Document US 5.604.413 discloses relevant prior art.

The main object of the invention is to correct tool position errors in machine tools, in order to achieve high speed and acceleration of the moving parts with simultaneous high precision, without posing substantial limits on machine performance and without introducing constructional complexity.

A further object is to correct in open cycle the position error read on the machine axes, in addition to the centrifugal component of the tool position error deduced from the masses and rigidity of the structure in the various directions.

A further object of the invention is to correct the tool position by taking account of the error between the true tool position and the true position of the axes, and to hence further reduce the error between the actual position and theoretical position of the tool.

A further object of the invention is to drastically reduce the static error on reversing movement, due to reversal response delays deriving from friction forces, and to substantially improve the statistical values of the axis positioning precision.

A further object of the invention is to correct the tool orientation.

A further object of the invention is to make it possible at any moment to test the arbor behaviour in the three directions at different frequencies, on the basis of the position of the axes.

A further object of the invention is to increase machine dynamic rigidity during power chip removal machining, so reducing machining chatter and considerably raising the machine removal limits, while allowing continuous monitoring of the amplitude of arbor vibrations deriving both from chatter and from tool unbalance, with possible indication if limits are exceeded or with automatic adjustment of machining parameters.

A further object of the inventions is to allow measurement of the tool force based on the already measured arbor rigidity, so enabling the tool intactness and its state of wear to be verified and to correct any deformations induced in the machine.

A further object of the invention is to allow closed cycle monitoring of the tool position when using very rapid and precise measurement systems which indicate the tool position instantaneously and with high precision during machining, and including monitoring of the dynamic deformations to which it is subjected.

A further object of the invention is to make the correction using axes of heads provided for other purposes, in order thereby to effect the position correcting action.

All these and further objects which will be apparent from the ensuing description are attained, according to the invention, by a method for correcting tool position errors as described in claim 1.

The invention also comprises a device for correcting tool position errors in machine tools as described in claim 11.

A preferred embodiment of the invention is described in detail hereinafter with reference to the accompanying drawings, on which:
- Figure 1: is a schematic view of a milling machine with its tool movable in accordance with three degrees of freedom and provided with the correction device of the invention.
- Figure 2: is a partly sectional enlarged schematic view of the correction plate interposed between the machine and the tool arbor,
- Figure 3: is a schematic front view of the correction plate,
- Figure 4: is an enlarged sectional detail of an actuator for the correction plate,
- Figure 5: is a schematic view of the machine of Figure 1 connected to a correction circuit relative to one degree of freedom,
- Figure 6: shows four wave forms illustrating the invention of the correction device,
- Figure 7: shows a second embodiment of the correction device of the invention relative to one degree of freedom applied to a milling machine.
- Figure 8: shows a third embodiment of the correction device of the invention relative to two degrees of freedom, using a double rotatable head of quick response,
- Figure 9: shows a fourth embodiment of the correction device of the invention relative to one degree of freedom, usable for example in the laser cutting of plate metal,
- Figure 10: shows the correcting action in machining a surface of different types in space,
- Figure 11: shows the correcting action in machining a surface of different types in a plane, and
- Figure 12: shows a fifth embodiment of the correction device of the invention relative to two degrees of freedom, usable for example in laser cutting of plate metal.

As can be seen from the figures, the device of the invention can be applied to all types of machine tools, including those of traditional type, and comprises, preferably in proximity to the tool (it is less easy on the workpiece given its weight and dimensions), an active system having a response readiness and accuracy much higher than those of the machine and able to undergo movements in order to correct the position and possibly also the orientation of the tool relative to the workpiece.

What essentially distinguishes the device of the invention from traditional devices is the fact that it reduces tool position errors by tool correction movements (correction axes) having action components in those directions already present on the machine axes (principle movement axes). Hence the machine degrees of freedom are repeated in the device of the invention, which moves in the same direction as the principle machine axes which are to be corrected, these correction movements being of very short travel aimed at correcting the residual error, with all the advantages which will become apparent hereinafter.

If these axes are also present for other purposes, such as in the case of heads with one or more rotary axes, and they are sufficiently fast, they can be used for the correction function, without adding further axes.

However, whereas the principal machine axes cover the entire field of work, and are therefore heavy and slow, the correction axes of the device of the invention, which moves the tool in the same directions, have travel limited to the extent of the correction and, as very small masses are involved in the movement, they achieve for the aforesaid reasons extremely quick response and a very small residual error.

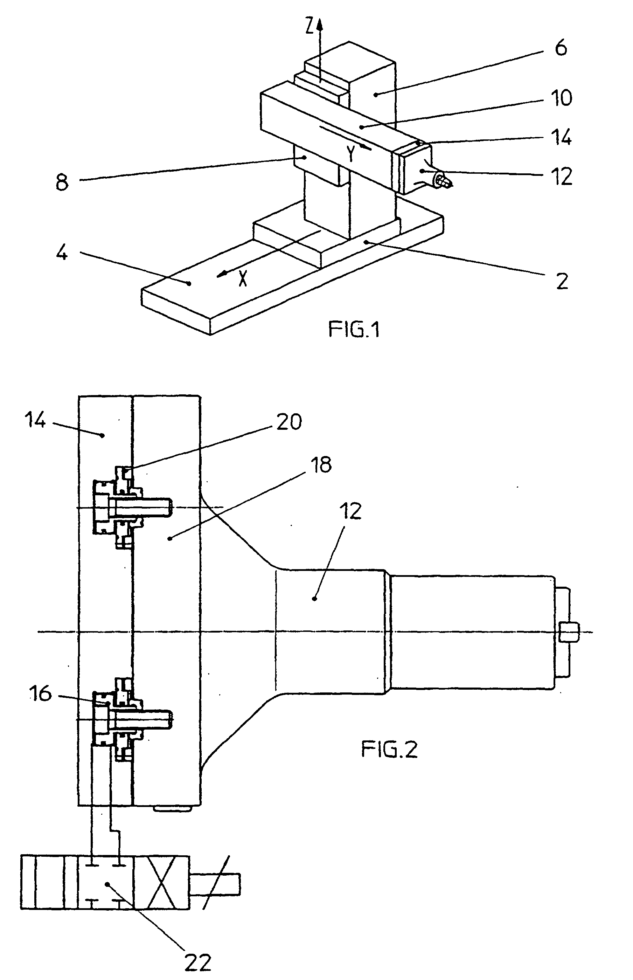

Figure 1 schematically shows a milling machine to which a device of the invention is applied. The machine comprises a carriage 2 movable along the X axis along a fixed bed 4 and supporting an upright 6, along which a bracket 8 can support along the Z axis.

The bracket 8 supports, slidable along the Y axis, a slide support 10 at the end of which the tool arbor support 12 is mounted.

The unit which implements the device of the invention is interposed between the support 10 and the tool arbor support 12.

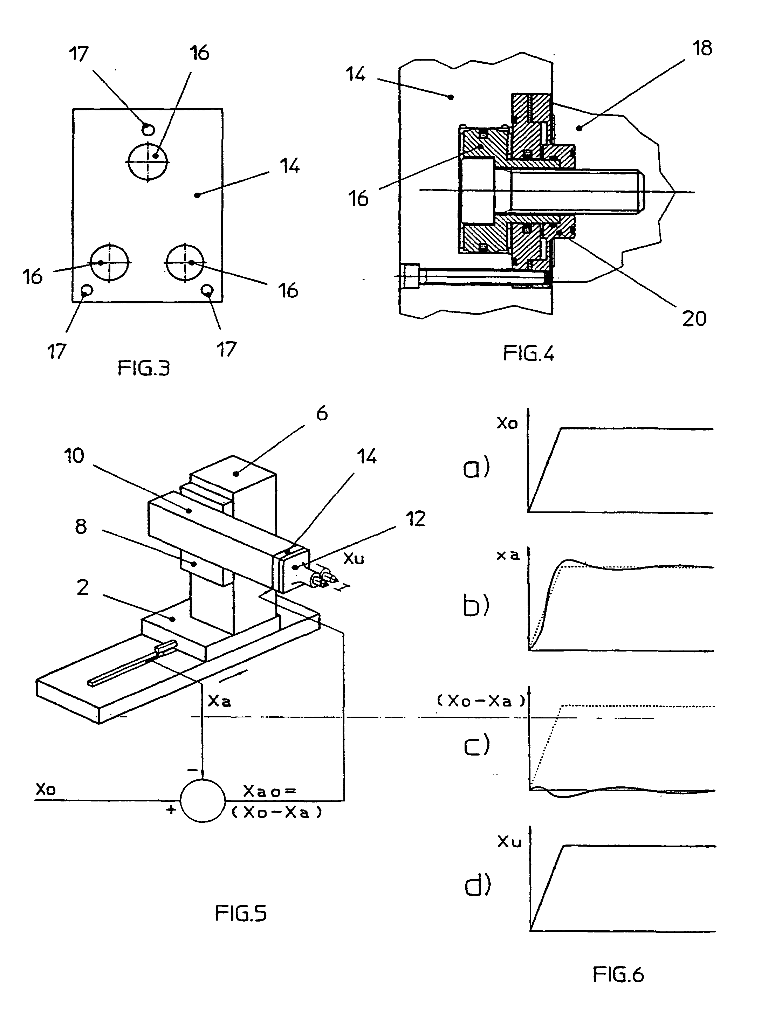

In the illustrated embodiment it consists of a plate 14 in which three identical double-acting hydraulic cylinders 16 are housed with their axes parallel. Two of these cylinders are positioned at the same lower level, the third being positioned at a higher level (see Figure 3). They interface with a plate 18 of the tool arbor support 12, between them and the arbor support there being interposed three axial disc springs 20, their purpose being to enable only the three required movements to be made, without allowing lateral translation or axial rotation.

The three hydraulic cylinders are independently fed via quick-response servo-valves 22, which enable the plate 18 to move such as to implement the tool correction movements in the three directions.

Specifically, opposing movement of the upper actuator 16 and the two lower actuators 16 causes the plate 18 to rotate about the X axis and consequently cause the tool to undergo movements in the direction of the X axis. Opposing movement of just the two lower actuators 16 causes the plate 18 to rotate about the Z axis and consequently cause the tool to undergo correction movements in the direction of the X axis. Simultaneous concordant movement of the three actuators 16 causes the plate 18 and hence the tool to traverse in the direction of the Y axis.

The rigidity of the springs and of the oil present in the actuators, the mass of the arbor support 12 and the response rapidity of the servo-valves 22 enable very high pass-bands of greater than 50 Hz to be achieved for the system which moves the arbor support relative to the support 10.

Other embodiments are also possible, using different types of actuators (servo-motors, piezoelectric devices, etc.) able to implement the movements with different linkages (direct action, screws and balls, etc.)

The principle on which the operation of the device of the invention is based is apparent from Figure 5. In this it can be seen that with reference to the type of correction made, and regarding for ease of representation only the X axis, in an infinitely rigid machine if Xₒ is the coordinate of the controlled theoretical position, Xₐ is the true coordinate of the X axis and Xᵤ is the true coordinate of the tool, the position error of the axis and of the tool relative to the direction is given by Xₐₒ = Xₒ - Xₐ = Xₒ - Xᵤ.

The signal Xₐₒ is processed by the device hardware, to provide the actuators 16 of the correction device with the appropriate commands to cause the true value of the coordinate Xᵤ to coincide with the theoretical value Xₒ.

Figure 6 is the theoretical graph showing the variation of the movement component along the X axis with time. Figure 6a shows the theoretical variation. Figure 6b shows the true variation, which differs from the theoretical variation by virtue of the errors of the control system. Figure 6c shows the variation of the correction signal, which is determined instantaneously by comparison between the theoretical position and the true position of the axis. Figure 6d shows the corrected variation of the tool movement component in the X direction, which is substantially similar to the theoretical variation because of the very rapid and accurate response of the correction device.

It is apparent that the aforegoing, which was limited to the X coordinate for reasons of descriptive clarity, is also valid for the other coordinates in spatial corrective action, which can be either total or partial.

In the aforegoing example, the extent of the correction to be applied, ie the information to be fed to the system for processing the correction signal, is obtained as the difference between the value of the value of the theoretical coordinate Xₒ and the value of the true coordinate Xₐ.

However, other criteria for acquiring the information necessary for the correction can be used. For example, the following can be used:
- corrections deduced from previous measurements made on the workpiece,
- corrections to the behaviour of the machine axes deduced by their measurement,
- calculation of the tool position error given by structural yielding inferred from a knowledge of real-time speed and acceleration, the error deduced from previously acquired machine response and yielding characteristics,
- real-time reading of the position error between the theoretical position and true position of the principle machine axes,
- measurement of the dynamic component of the tool position error, measured for example using high precision accelerometers positioned in proximity to the arbor,
- absolute measurement of the true position of the tool in relation to its theoretical position imposed by numerical control, inferred from direct measurement device, as for example laser interferometer.

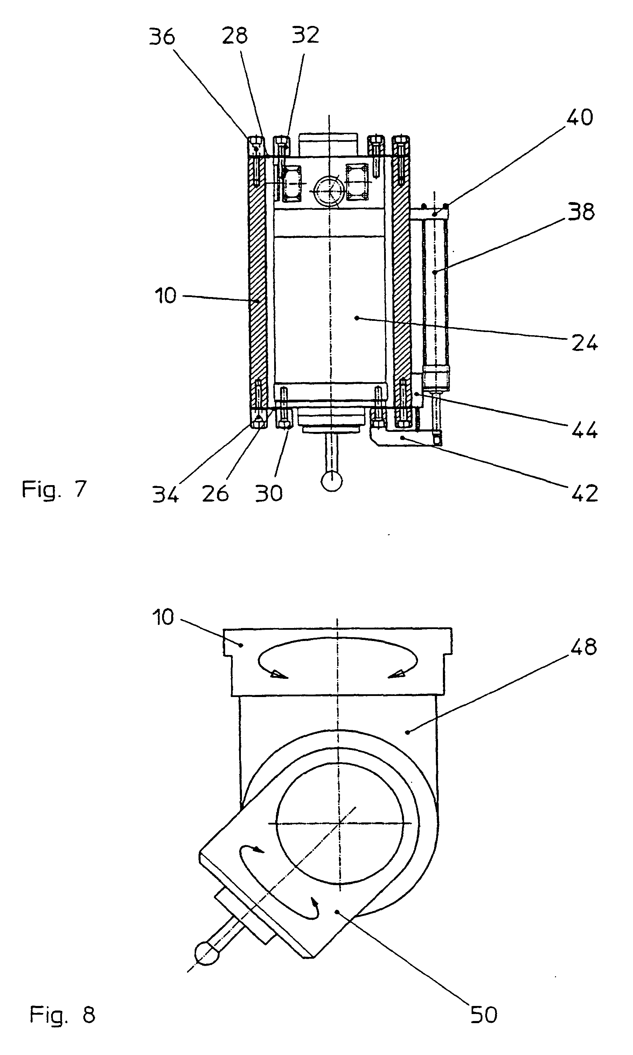

Figure 7 shows a correction device of the invention which uses an electro-arbor 24 supported by two laminas 26 and 28 secured to it by rings 30 and 32 respectively. Said laminas are fixed to the support 10, downstream the machine axes by a further two rings 34 and 36 such that the electro-arbor 24 can undergo axial movements of an extent sufficient to make the dynamic correction.

This dynamic correction is effected by a suitable actuator 38 of hydraulic, piezoelectric or other type, secured to the support 10 by a fixed bracket 40, to axially move the electro-arbor by a movable bracket 42, with suitable feedback by a transducer 44.

This corrective action can also be provided in a different manner via one or more axes already existing in the machine for other functions, as for example in the case of those heads with one or more axes provided to suitably orientate the tool during machining. In this case the invention is implemented by providing the head axis or axes with rapid response so that they can be used to at least partially correct the position errors of the principle machine axes.

For example, Figure 8 shows a double rotatable head of right-angled type having a first part 48, rotating with respect to the support 10, downstream the machine axes and a second part 50 which supports the arbor. If one or both the axes have quick response motors, they can move in accordance with the two possible degrees of freedom and hence correct the position error in said two degrees of freedom. The correction is possible in this case on condition that the arbor axis is not perpendicular to the machining surface and is able to return the tool close to the surface using just one of the two axes, or onto the profile being machined using both the axes. The extent of the correction can be easily deduced once the true tool position, the surface position and the direction of action of the two axes are known.

When machining spatial surfaces, such as when machining moulds, the tool position error correction does not necessarily have to be total, in that to correct the machining error it is sufficient to return the tool to the theoretical surface or to its theoretical trajectory. In the specific case of machining profiles in a plane, it is sufficient to return the tool to its trajectory.

Consequently when speaking of tool position correction, this does not necessarily mean returning it to its theoretical position, but rather returning it to its geometrical machining locus.

Moreover, as the correction can be total or partial, tool position correction generally means identifying the distance of the tool from fthe geometrical machining locus either on a surface in space or on a trajectory in a plane.

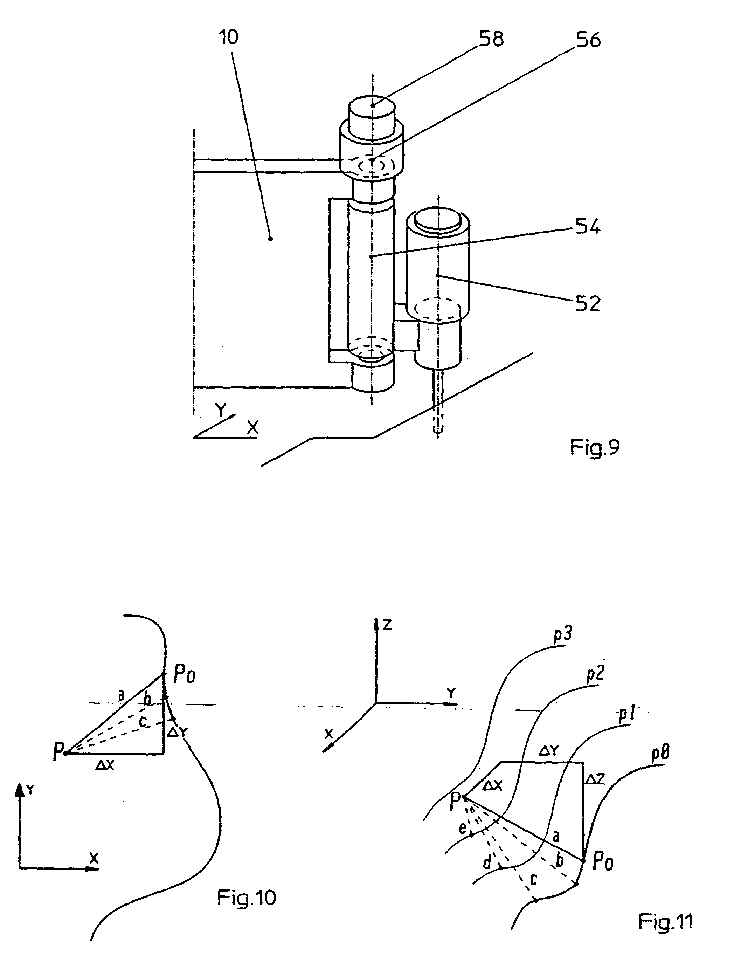

Figure 9 shows a correction device of the invention used in machining in a plane, for example with a laser cutting device 52 fixed to a rotary arm 54 supported by the support 10. The arm 54 is rotated by a quick-response motor 56 with suitable feedback by the rotary transducer 58. The arm 54 has to be able to rotate through about 90 degrees, and by being angularly rotated slowly in a suitable manner it is always possible to apply corrective action when the direction of the tangent to the profile varies. The arm orientation angle is transmitted to the numerical control system which corrects the position of the axes in relation to the angle assumed.

Figure 10 shows the machining of a profile "p" in a plane. It shows the theoretical point Po and the true point P affected by the errors Δx and Δy.

The corrective action can follow the path "a", which completely corrects the error but requires two actuators, or it can follows the path "b", with a movement allowed by a single actuator, or it can follow the path "c", which is the minimum distance path and requires either two actuators or preliminary orientation of the corrective action of a single actuator.

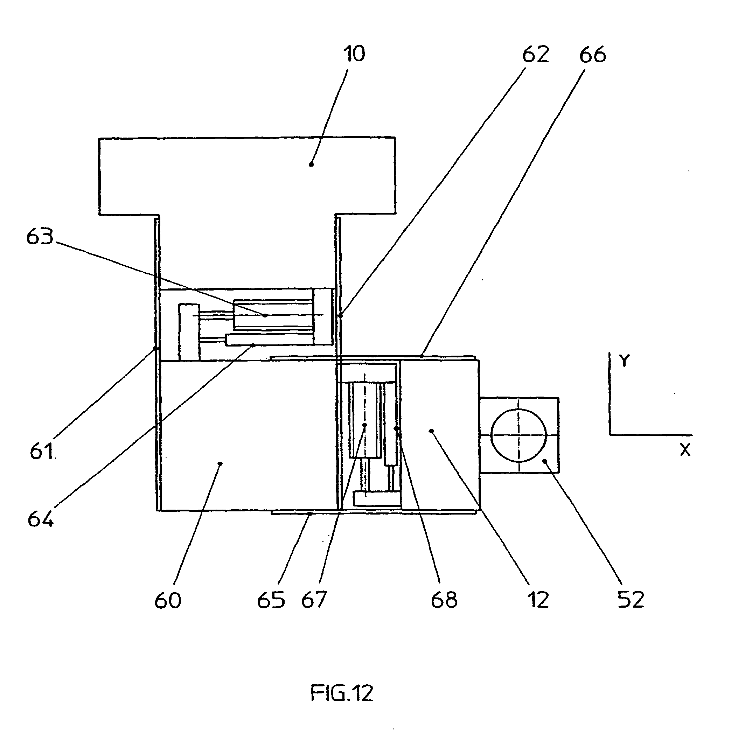

Figure 11 shows the machining of a surface in space. It shows the theoretical point Po, the true point P affected by the errors Δx, Δy and Δz, the machining path p0 and the paths p1, p2 and p3, which are sections through the surface on planes parallel to the machining plane p0. the corrective action to return the tool to the machining path p0 can be applied along the path "a" using three actuators, or along the path "b" using two actuators, or along the path "c" using three actuators which however return the tool not to the point Po but to the closest position along the path p0, or along the path "d" to return the tool to the surface and specifically to the path p1 using a single actuator, or finally along the path "e" which uses two actuators and which returns the tool to the surface and specifically to the path p2, with the shortest correction.

Figure 12 shows an alternative embodiment of correction on two size machines as those for cutting plate metal, with correcting action along two degrees of freedom. The support 10 is placed downstream the axes of the machine and supports the part 60 by two laminas 61 or 62 enabling correction movements along the X axis through an actuator 63 and a measurement transducer 64. On its turn, through other laminas 65 and 66, an actuator 67 and a feed-back transducer 68 the correction movement of the support 12 of the tool is obtained along the Y axis, or of the laser cutting device 52 or other operating unit.

From the aforegoing it is apparent that the method and device of the invention fully attain the stated objects, and in particular:
- they enable tool position errors to be corrected in machine tools while attaining high speed and acceleration of the moving parts and at the same time high precision, without substantial limits on the machine performance and without constructional complexity;
- they correct these errors with very small movements of the axes of the correction device, of generally less than one millimetre. Consequently the corrections which can be established with degrees of freedom not necessarily equal to that of the machine, don't require actual guides but may utilize very compact and economical solutions, such as solutions involving flexible laminas: the actuators for the movements can also be very compact, using hydraulic cylinders or piezoeletric actuators;
- they involve very small clearances and great rigidity, and as they practically add no mass to the system they enable considerable dynamic performance to be obtained;
- they limit the action stroke of the correction device to the extent of the residual error of the principle axes, and although this means that methods must be used to measure this residual error, at the same time they limit the width of the correction action and hence reduce the residual error to a minimum after correction;
- if they use arrangements for directly measuring the cool position, for .example laser interferometers or laser tracking, they enable direct calculation of the error to be made, so precisely defining the corrective action;
- because of the small extent of the corrective action, the reaction movements induced in the support structure for the correction device are of practically negligible extent;
- in the case of a machine tool provided with supplementary rotational axes, such as rotatable or double rotatable heads provided to suitably orientate the tool in relation to the surface, these same axes, if given sufficiently fast response, can be used to provide the necessary corrective action, considering that the movements required for the correction do not appreciably alter tool orientation;
- they allow open cycle correction of the position error read on the machine axes, in addition to the structure centrifugal component deduced from its rigidity in the various directions;
- they enable the tool position to be corrected by taking account of the dynamic deformation of the structure, or of the error between the position of the tool and the position of the axes, and to hence further reduce the error between the actual position and theoretical position of the tool;
- they drastically reduce the static error arising during movement reversal, due to reversal response delays deriving from friction forces, and substantially improve the statistical values of the axis positioning precision;
- they enable tool orientation to be corrected;
- they make it possible at any moment to test the arbor behaviour in the three directions at different frequencies, on the basis of the position of the axes, by operating the actuators at the different frequencies to hence stress the machine by inertial forces in the different directions;
- they considerably increase machine dynamic rigidity during power chip removal machining, so reducing machining chatter and considerably raising the machine removal limits, while allowing continuous monitoring of the amplitude of arbor vibrations deriving both from chatter and from tool unbalance, with possible indication if limits are exceeded a with automatic adjustment of machining parameters;
- they allow measurement of the tool force based on the arbor rigidity already known from response spectra, so enabling the tool intactness and its state of wear to be verified, and to correct any deformations induced in the machine;
- they enable the tool position to be continuously corrected during its rotation, with very precise upward or downward correction of the hole diameter and shape during boring.

## Claims

1. A method for correcting tool position errors in machine tools, the method comprising:
- determining at least part of the difference, in at least one predetermined degree of freedom, between the true position of the tool and a point on the theoretical geometrical locus which the tool should describe,
- converting said difference into a correction signal, and
- using said correction signal to move the tool in accordance with that degree of freedom, whereby the corrective movement of the tool occurs relative to the structure directly supporting the tool at a response rate at least double that of the machine tool itself.

2. A method as claimed in claim 1, **characterised by** determining at least part of the difference, referred to said one degree of freedom, between the true position of the tool and the position of a point on the theoretical machining surface.

3. A method as claimed in claim 1, **characterised by** determining at least part of the difference, referred to said one degree of freedom, between the true position of the tool and the position of a point on the theoretical trajectory which the tool should describe.

4. A method as claimed in claim 1, **characterised by** determining at least part of the difference, referred to said one degree of freedom, between the true position of the tool and its theoretical position.

5. A method as claimed in claim 1, **characterised by** determining said difference from corrections deduced from previous measurements on the workpiece.

6. A method as claimed in claim 1, **characterised by** determining the difference between the theoretical behaviour of the machine axes and the true behaviour deduced from measurements thereof.

7. A method as claimed in claim 1, **characterised by** determining the difference by calculating the tool position error given by structural yielding inferred from a knowledge of real-time speed and acceleration, said error being deduced from previously measured masses, structural rigidities and machine response characteristics.

8. A method as claimed in claim 1, **characterised by** determining the difference by real-time reading of the error between the theoretical position and true position of the axis of each axis of the machine.

9. A method as claimed in claim 1, **characterised by** determining the difference by measuring the dynamic component of the tool position error, using high precision accelerometers positioned in proximity to the tool arbor.

10. A method as claimed in claim 1, **characterised by** determining the difference by absolute measurement of the true position of the tool in relation to its theoretical position imposed by the machine numerical control system.

11. A device for implementing the method claimed in one or more of the claims 1 to 10, said device comprising:
- at least one member for moving the tool in accordance with at least one predetermined degree of freedom, said member being inserted into the structure directly supporting the tool (10, 12, 54) and having a response rate at least double that of the machine tool itself;
- means for determining at least part of the difference, in said at least one degree of freedom, between the true position of the tool and a point on the theoretical geometrical locus which the tool should describe, and
- means for converting said difference into a control signal for moving said member in accordance with said at least one degree of freedom.

12. A device as claimed in claim 11, **characterised by** comprising means for determining at least part of the difference, referred to said degree of freedom, between the true position of the tool and the position of a point on the theoretical machining surface.

13. A device as claimed in claim 11, **characterised by** comprising means for determining at least part of the difference, referred to said degree of freedom, between the true position of the tool and the position of a point on the theoretical trajectory which the tool should describe.

14. A device as claimed in claim 11, **characterised by** comprising means for determining at least part of the difference, referred to said degree of freedom, between the true position of the tool and its theoretical position.

15. A device as claimed in claim 11, **characterised in that** at least one actuator (16,38,56,63,68) acting in accordance with said degree of freedom is inserted into the tool support structure (10,12,54).

16. A device as claimed in claim 11, **characterised in that** three non aligned actuators (16) operable independently of each other are inserted into the tool support structure to realize three degrees of freedom of the regulating member.

17. A device as claimed in claim 11, **characterised in that** three actuators (16) acting parallel to each other are inserted between the machine support (10) and the arbor support structure (12).

18. A device as claimed in claim 11, **characterised in that** said actuator (16) consists of a double-acting hydraulic cylinder inserted into the tool support structure, which is formed in two parts between which axial disc springs (20) are interposed.

19. A device as claimed in claim 15, **characterised in that** each actuator (16) is fed via a hydraulic servo-valve (22), to which it is connected.

20. A device as claimed in claim 11, **characterised in that** said actuator is of piezoelectric type.

21. A device as claimed in claim 11, **characterised in that** said means for determining the difference consist of signals made available by the machine numerical control system.

22. A device as claimed in claim 11, **characterised in that** said means for determining the difference consist of sensors for sensing the dynamic actions to which the component structures of the machine are subjected during machining.

23. A device as claimed in claim 11, **characterised by** comprising at least one accelerometer for determining the dynamic component of the error between the true position of the arbor support and its theoretical position.

24. A device as claimed in claim 11, **characterised in that** the accelerometer is positioned downstream of the corresponding actuator.

25. A device as claimed in claim 11, **characterised by** comprising feedback means (44,58,64,68) for the correction measurement.

26. A device as claimed in claim 11, **characterised in that** said regulating member consists of a rotary axis of the tool carrying head.

27. A device as claimed in claim 11, **characterised in that** said regulating member consists of the axially traversable tool carrying structure.

28. A device as claimed in claim 27, **characterised in that** the arbor carrying structure (24) is supported by two laminas (26,28) and is associated for its traversing movements with an actuator (38) of high response rate.

29. A device as claimed in claim 11 suitable for machining a predetermined profile in a plane, **characterised in that** said regulating member consists of a rotary axis provided with means for its orientation such that the correction has useful component against said profile.

30. A device as claimed in claim 11 suitable to plane working according to a prefixed outline **characterised in that** said member for regulating comprises:
- a first pair of laminas (61,62) for connecting the structure (10), downstream the axis of the machine, to a first part (60),
- a second pair of laminas (65,66) for connecting said first part (60) to a second part (12) forming the support of the tool,
- a first actuator placed between said structure (10) and said first part (60),
- a second actuator placed between said first part (60) a said second part (12).

## Patentansprüche

1. Verfahren zur Korrektur von Werkzeugpositionsfehlern in Werkzeugmaschinen, wobei das Verfahren umfasst:
- Bestimmung mindestens eines Teils der Differenz in mindestens einem vorher festgelegten Freiheitsgrad zwischen der tatsächlichen Position des Werkzeuges und einem Punkt an dem theoretischen geometrischen Ort, welcher von dem Werkzeug eingenommen werden soll,
- Umwandeln der besagten Differenz in ein Korrektursignal, und
- Benützen des besagten Korrektursignals, um das Werkzeug entsprechend dem Freiheitsgrad zu bewegen, wobei die Korrekturbewegung des Werkzeuges relativ zu der Struktur erfolgt, die das Werkzeug direkt unterstützt, mit einer Ansprechgeschwindigkeit, die mindestens zweimal so groß wie des Maschinenwerkzeug selbst ist.

2. Verfahren nach Anspruch 1, **gekennzeichnet durch** die Bestimmung mindestens eines Teils der Differenz in Bezug auf den besagten einen Freiheitsgrad zwischen der tatsächlichen Position des Werkzeuges und der Position eines Punktes auf der theoretisch zu bearbeitenden Oberfläche.

3. Verfahren nach Anspruch 1, **gekennzeichnet durch** die Bestimmung mindestens eines Teils der Differenz in Bezug auf den besagten einen Freiheitsgrad zwischen der tatsächlichen Position des Werkzeuges und der Position eines Punktes auf der theoretischen Bewegungsbahn, welche das Werkzeug beschreiben soll.

4. Verfahren nach Anspruch 1, **gekennzeichnet durch** die Bestimmung mindestens eines Teils der Differenz in Bezug auf den besagten einen Freiheitsgrad zwischen der tatsächlichen Position des Werkzeuges und seiner theoretischen Position.

5. Verfahren nach Anspruch 1, **gekennzeichnet durch** die Bestimmung der besagten Differenz aus Korrekturen, welche von vorherigen Messungen des Werkstücks abgeleitet sind.

6. Verfahren nach Anspruch 1, **gekennzeichnet durch** die Bestimmung der Differenz zwischen dem theoretischen Verhalten der Maschinenachsen und dem tatsächlichen Verhalten, das von deren Messungen abgeleitet ist.

7. Verfahren nach Anspruch 1, **gekennzeichnet durch** die Bestimmung der Differenz **durch** Berechnen des Werkzeugpositionsfehlers, der **durch** strukturelles Nachgeben erfolgt, abgeleitet von der Kenntnis der Echtzeit-Geschwindigkeit und Beschleunigung, wobei der besagte Fehler von den vorher gemessenen Massen, strukturellen Steifheiten und dem Maschinenreaktionsverhalten abgeleitet wird.

8. Verfahren nach Anspruch 1, **gekennzeichnet durch** die Bestimmung der Differenz **durch** Echtzeit-Ablesung des Fehlers zwischen der theoretischen Position und der tatsächlichen Position von jeder Achse der Maschine.

9. Verfahren nach Anspruch 1, **gekennzeichnet durch** die Bestimmung der Differenz **durch** Messen der dynamischen Komponente des Werkzeugpositionsfehlers, wobei hochpräzise Beschleunigungsmesser benützt werden, die in der Nähe des Werkzeugdorns positioniert sind.

10. Verfahren nach Anspruch 1, **gekennzeichnet durch** die Bestimmung der Differenz **durch** absolute Messung der tatsächlichen Position des Werkzeuges relativ zu seiner theoretischen Position, die auf dem numerischen Maschinenkontrollsystem beruht.

11. Vorrichtung zur Durchführung des Verfahrens nach einem oder mehreren der Ansprüche 1 bis 10, wobei die besagte Vorrichtung umfasst
- mindestens ein Element, um das Werkzeug mit mindestens einem Freiheitsgrad zu bewegen, wobei das besagte Element in die Struktur eingeführt wird, welche das Werkzeug (10,12,54) direkt unterstützt und ein Ansprechgeschwindigkeit aufweist, die mindestens zweimal so groß wie die der Maschine selbst ist;
- Mittel zur Bestimmung mindestens eines Teils der Differenz in mindestens einem Freiheitsgrad zwischen der tatsächlichen Position des Werkzeuges und einem Punkt an dem theoretischen geometrischen Ort, welchen das Werkzeug beschreiben sollte, und
- Mittel zum Umwandeln der besagten Differenz in ein Kontrollsignal zum Bewegen des besagten Elements gemäß dem besagten mindestens einen Freiheitsgrad.

12. Vorrichtung nach Anspruch 11, **dadurch gekennzeichnet, dass** sie Mittel zur Bestimmung mindestens eines Teils der Differenz in Bezug auf den besagten Freiheitsgrad zwischen der tatsächlichen Position des Werkzeuges und der Position eines Punktes auf der theoretisch zu bearbeitenden Oberfläche aufweist.

13. Vorrichtung nach Anspruch 11, **dadurch gekennzeichnet, dass** sie Mittel zur Bestimmung mindestens eines Teils der Differenz in Bezug auf den besagten Freiheitsgrad zwischen der tatsächlichen Position des Werkzeuges und der Position eines Punktes auf der theoretischen Bahn, die das Werkzeug beschreiben soll, aufweist.

14. Vorrichtung nach Anspruch 11, **dadurch gekennzeichnet, dass** sie Mittel zur Bestimmung mindestens eines Teils der Differenz in Bezug auf den besagten Freiheitsgrad zwischen der tatsächlichen Position des Werkzeuges und seiner theoretischen Position aufweist.

15. Vorrichtung nach Anspruch 11, **dadurch gekennzeichnet, dass** mindestens ein Aktuator (16, 38, 56, 63, 68), der gemäß dem besagten Freiheitsgrad wirkt, in die Werkzeugunterstützungsstruktur (10, 12, 54) eingesetzt ist.

16. Vorrichtung nach Anspruch 11, **dadurch gekennzeichnet, dass** drei nicht ausgerichtete Aktuatoren (16), die unabhängig von einander tätig sind, in die Werkzeugunterstützungsstruktur eingesetzt sind, um drei Freiheitsgrade des Steuerelementes zu realisieren.

17. Vorrichtung nach Anspruch 11, **dadurch gekennzeichnet, dass** drei Aktuatoren (16), die parallel zueinander wirken, zwischen der Maschinenunterstützung (10) und der Dornunterstützungsstruktur (12) eingesetzt sind.

18. Vorrichtung nach Anspruch 15, **dadurch gekennzeichnet, dass** der besagte Aktuator (16) aus einem zweifachwirkenden hydraulischen Zylinder besteht, welcher in die Werkzeugunterstützungsstruktur eingefügt wird, welche aus zwei Teilen gebildet ist, zwischen denen axiale Scheibenfedern (20) angeordnet sind.

19. Vorrichtung nach Anspruch 15, **dadurch gekennzeichnet, dass** jeder Aktuator (16) durch ein hydraulisches Servoventil (22) versorgt wird, mit dem er verbunden ist.

20. Vorrichtung nach Anspruch 11, **dadurch gekennzeichnet, dass** der besagte Aktuator vom piezoelektrischen Typ ist.

21. Vorrichtung nach Anspruch 11, **dadurch gekennzeichnet, dass** die besagten Mittel zum Feststellen der Differenz aus Signalen bestehen, die durch das numerische Kontrollsystem der Maschine erhältlich sind.

22. Vorrichtung nach Anspruch 11, **dadurch gekennzeichnet, dass** die besagten Mittel zum Feststellen der Differenz aus Sensoren zum Erkennen der dynamischen Aktivitäten bestehen, welchen die Komponentenstruktur der Maschine während des Bearbeitung unterliegt.

23. Vorrichtung nach Anspruch 11, **dadurch gekennzeichnet, dass** sie mindestens einen Beschleunigungsmesser zum Festellen der Fehler der dynamischen Komponenten zwischen der richtigen Position der Dornunterstützung und der theoretischen Position aufweist.

24. Vorrichtung nach Anspruch 11, **dadurch gekennzeichnet, dass** der Beschleunigungsmesser dem entsprechenden Aktuator nachgeordnet positioniert ist.

25. Vorrichtung nach Anspruch 11, **dadurch gekennzeichnet, dass** sie Rückmeldungsmittel (44, 58, 64, 68) zur Korrekturmessung aufweist.

26. Vorrichtung nach Anspruch 11, **dadurch gekennzeichnet, dass** die besagten Regulierelemente aus einer rotierenden Achse des werkzeugtragenden Kopfes bestehen.

27. Vorrichtung nach Anspruch 11, **dadurch gekennzeichnet, dass** das besagte Steuerelement aus der axial verfahrbaren Werkzeugtragstruktur besteht.

28. Vorrichtung nach Anspruch 27, **dadurch gekennzeichnet, dass** die Dorn tragende Struktur (24) von zwei Platten (26, 28) unterstützt wird und für seine seitlichen Bewegungen einem Aktuator (38) mit hoher Antwortgeschwindigkeit zugeordnet ist.

29. Vorrichtung nach Anspruch 11, geeignet zum Bearbeiten eines vorbestimmten Profils in einer Ebene, **dadurch gekennzeichnet, dass** das Steuerelement aus einer rotierenden Achse besteht, welches mit Mitteln zu seiner Orientierung versehen ist, sodass die Korrektur eine nützliche Komponente gegen das besagte Profil aufweist.

30. Vorrichtung nach Anspruch 11, geeignet zum Bearbeiten einer Ebene entsprechend einem vorher festgelegten Umriss, **dadurch gekennzeichnet, dass** das besagte Element zum Regulieren besteht aus:
- einem ersten Paar von Platten (61, 62) zum Verbinden der Struktur (10) stromabwärts der Achse der Maschine mit einem ersten Teil (60),
- einem zweiten Paar von Platten (65, 66) zum Verbinden des ersten Teils (60) mit einem zweiten Teil (12), welches die Unterstützung des Werkzeuges bildet,
- einem ersten Aktuator, welcher zwischen der besagten Struktur (10) und dem besagten ersten Teil (60) angeordnet ist,
- einem zweiten Aktuator, welcher zwischen dem besagten ersten Teil (60) und dem besagten zweiten Teil (12) angeordnet ist.

## Revendications

1. Procédé pour corriger des erreurs de position d'outil sur des machines outils, le procédé comprenant :
- une détermination au moins en partie de la différence, dans au moins un degré prédéterminé de liberté, entre la position exacte de l'outil et un point sur le lieu géométrique théorique que l'outil devrait parcourir,
- une conversion de ladite différence en un signal de correction, et
- une utilisation dudit signal de correction pour déplacer l'outil selon que le degré de liberté, par lequel le déplacement correctif de l'outil survient, relatif à la structure supportant directement l'outil à une vitesse de réponse au moins le double de celle de l'outil de machine lui-même.

2. Procédé comme revendiqué dans la revendication 1, **caractérisé par** la détermination au moins en partie de la différence, rattachée audit un degré de liberté, entre la position exacte de l'outil et la position d'un point sur la surface d'usinage théorique.

3. Procédé comme revendiqué dans la revendication 1, **caractérisé par** la détermination au moins en partie de la différence, rattachée audit un degré de liberté, entre la position exacte de l'outil et la position d'un point sur la trajectoire théorique que l'outil devrait parcourir.

4. Procédé comme revendiqué dans la revendication 1, **caractérisé par** la détermination au moins en partie de la différence, rattachée audit un degré de liberté, entre la position exacte de l'outil et sa position théorique.

5. Procédé comme revendiqué dans la revendication 1, **caractérisé par** la détermination de ladite différence à partir des corrections déduites de mesures précédentes sur la pièce de fabrication.

6. Procédé comme revendiqué dans la revendication 1, **caractérisé par** la détermination de la différence entre le comportement théorique des axes de la machine et le comportement exact déduit de mesure de cela.

7. Procédé comme revendiqué dans la revendication 1, **caractérisé par** la détermination de la différence en calculant l'erreur de position d'outil donnée par une flexibilité structurelle déduite d'une connaissance sur la vitesse et l'accélération en temps réel, ladite erreur étant déduite de masses mesurées précédemment, de résistances structurelles et de caractéristiques de réponse de machine.

8. Procédé comme revendiqué dans la revendication 1, **caractérisé par** la détermination de la différence en lisant en temps réel l'erreur entre la position théorique et la position exacte sur les axes de chaque axe de la machine.

9. Procédé comme revendiqué dans la revendication 1, **caractérisé par** la détermination de la différence en mesurant la composante dynamique de l'erreur de position d'outil, utilisant des accéléromètres de haute précision positionnés à proximité de l'arbre d'outil.

10. Procédé comme revendiqué dans la revendication 1, **caractérisé par** la détermination de la différence par la mesure absolue de la position exacte de l'outil par rapport à sa position théorique imposée par le système de contrôle numérique de machine.

11. Dispositif pour mettre en oeuvre le procédé revendiqué dans une ou plusieurs des revendications 1 à 10, ledit dispositif comprenant :
- au moins un élément pour déplacer l'outil selon au moins un degré prédéterminé de liberté, ledit élément étant inséré dans la structure supportant directement l'outil (10, 12, 54) et ayant une vitesse de réponse au moins le double que celui de l'outil de machine lui-même ;
- des moyens pour déterminer au moins en partie de la différence, dans au moins un degré de liberté, entre la position exacte de l'outil et un point sur le lieu géométrique théorique que l'outil devrait parcourir, et
- des moyens pour convertir ladite différence en un signal de contrôle pour déplacer ledit élément selon ledit au moins un degré de liberté.

12. Dispositif comme revendiqué dans la revendication 11, **caractérisé par** ce qu'il comprend un moyen pour déterminer au moins en partie de la différence, rattachée audit degré de liberté, entre la position exacte de l'outil et la position d'un point sur la surface d'usinage théorique.

13. Dispositif comme revendiqué dans la revendication 11, **caractérisé en ce qu'**il comprend un moyen pour déterminer au moins en partie de la différence, rattachée audit degré de liberté, entre la position exacte de l'outil et la position d'un point sur la trajectoire théorique que l'outil devrait parcourir.

14. Dispositif comme revendiqué dans la revendication 11, **caractérisé en ce qu'**il comprend un moyen pour déterminer au moins en partie de la différence, rattachée audit degré de liberté, entre la position exacte de l'outil et sa position théorique.

15. Dispositif comme revendiqué dans la revendication 11, **caractérisé en ce qu'**au moins un actionneur (16,38,56,63,68) actionné selon ledit degré de liberté est inséré dans la structure de support d'outil (10,12,54).

16. Dispositif comme revendiqué dans la revendication 11, **caractérisé en ce que** trois actionneurs non alignés (16) fonctionnant indépendamment les uns des autres sont insérés dans la structure de support d'outil pour réaliser trois degrés de liberté de l'élément régulant.

17. Dispositif comme revendiqué dans la revendication 11, **caractérisé en ce que** trois actionneurs (16) agissant en parallèle les uns aux autres sont insérés entre le support de machine (10) et la structure de support d'arbre (12).

18. Dispositif comme revendiqué dans la revendication 11, **caractérisé en ce que** ledit actionneur (16) consiste en un cylindre hydraulique à double effet inséré dans la structure de support d'outil, qui est formé en deux parties entre lesquelles des ressorts discoïdes axiaux (20) sont interposés.

19. Dispositif comme revendiqué dans la revendication 15, **caractérisé en ce que** chaque actionneur (16) est alimenté par une servo-valve hydraulique (22), à laquelle il est relié.

20. Dispositif comme revendiqué dans la revendication 11, **caractérisé en ce que** ledit actionneur est de type piézo-électrique.

21. Dispositif comme revendiqué dans la revendication 11, **caractérisé en ce que** lesdits moyens pour déterminer la différence consistent en des signaux mis à disposition par le système de contrôle numérique de machine.

22. Dispositif comme revendiqué dans la revendication 11, **caractérisé en ce que** lesdits moyens pour déterminer la différence consistent en des capteurs pour capter les actions dynamiques auxquelles les structures de composant de la machine sont soumises pendant l'usinage.

23. Dispositif comme revendiqué dans la revendication 11, **caractérisé en ce qu'**il comprend au moins un accéléromètre pour déterminer la composante dynamique de l'erreur entre la position exacte du support d'arbre et sa position théorique.

24. Dispositif comme revendiqué dans la revendication 11, **caractérisé en ce que** l'accéléromètre est positionné en aval de l'actionneur correspondant.

25. Dispositif comme revendiqué dans la revendication 11, **caractérisé en ce qu'**il comprend des moyens de contre-réaction (44,58,64,68) pour la mesure de correction.

26. Dispositif comme revendiqué dans la revendication 11, **caractérisé en ce que** ledit élément régulant consiste en un axe de rotation de la tête porteuse d'outil.

27. Dispositif comme revendiqué dans la revendication 11, **caractérisé en ce que** ledit élément régulant consiste en la structure porteuse d'outil transversale axialement.

28. Dispositif comme revendiqué dans la revendication 27, **caractérisé en ce que** la structure porteuse d'arbre (24) est supportée par deux lamelles (26,28) et est associée pour ses déplacements transversaux à un actionneur (38) à vitesse de réponse élevée.

29. Dispositif comme revendiqué dans la revendication 11 approprié à l'usinage d'un profil prédéterminé dans un plan, **caractérisé en ce que** ledit élément régulant consiste en un axe rotatif muni de moyens pour son orientation tels que la correction a une composante utile contre ledit profil.

30. Dispositif comme revendiqué dans la revendication 11 approprié à un travail plan selon un contour prédéterminé **caractérisé en ce que** ledit élément pour réguler comprend:
- une première paire de lamelles (61,62) pour connecter la structure (10), en aval de l'axe de la machine, à une première partie (60),
- une seconde paire de lamelles (65,66) pour connecter ladite première partie (60) à une seconde partie (12) formant le support de l'outil,
- un premier actionneur placé entre ladite structure (10) et ladite première partie (60),
- un deuxième actionneur placé entre ladite première partie (60) et ladite seconde partie (12).
